# DEMANDE DE BREVET EUROPEEN

(11) **EP 3 543 548 A1**
(43) Date de publication de la demande: **25.09.2019**
(21) Numéro de dépôt: 18305308.1
(22) Date de dépôt: 20.03.2018
(51) Int. Cl.: F16B 5/00, F16B 21/08

(54) **ELEMENT DE CONSTRUCTION**

(71) Demandeur: Universite de Nantes, 44000 Nantes (FR)
(72) Inventeur: FURET, Benoît, 44300 Nantes (FR); GARNIER, Sébastien, 44240 La Chapelle Sur Erdre (FR); PAQUET, Elodie, 44140 Aigrefeuille Sur Maine (FR); POULLAIN, Philippe, 44410 Saint Lyphard (FR); AMBIEHL, Alexandre, 44000 Nantes (FR); BRESSAC, Thomas, 44000 Nantes (FR)
(74) Mandataire: Novagraaf Technologies

(57) **Abrégé**

La présente invention concerne un élément de construction, dit premier élément de construction (10), équipé d'un système d'assemblage (30) à un deuxième élément de construction (20). Le système d'assemblage comprend :
- un logement (31) ménagé dans le premier élément de construction et comportant un rétrécissement (33) au niveau de son interface avec une face à assembler (11) ; et
- un élément d'assemblage (32) comprenant un corps (34) monté sur le deuxième élément de construction et muni d'une tête (35) ayant une forme escamotée en présence de contrainte et une forme déployée sinon.

Le logement (31) et l'élément d'assemblage (32) sont agencés pour que, pour assembler les premier et deuxième éléments de construction, la tête (35) de l'élément d'assemblage est introduite en force dans le logement (31), ladite tête présentant une forme escamotée à son passage dans le rétrécissement et une forme déployée après le passage du rétrécissement.

## Description

### Domaine technique de l'invention

La présente invention concerne le domaine de la construction de bâtiments et plus particulièrement l'assemblage d'éléments de construction, tels que des panneaux en matériau polymère.

### Etat de la technique

L'invention concerne l'assemblage d'un élément de construction, par exemple un panneau en matériau polymère, appelé premier élément de construction, avec le sol, avec le plafond ou avec un second élément de construction. Le second élément de construction peut être ou non identique au premier élément de construction. Le deuxième élément de construction peut également être un mannequin en bois (pour la réservation d'ouvertures) ou un élément en béton.

Les panneaux en matériau polymère, tels que du polystyrène ou de la mousse polyuréthane ou l'un de leurs dérivés, ou en matériau bio-sourcé (terre crue, cellulose, fibre végétale), servent classiquement de coffrage (pour le coulage de murs en béton) et/ou d'isolants et/ou de parement. Les panneaux sont généralement assemblés par un système de rainures et de languettes ou sont collés ensemble. Mais ce système d'assemblage n'est pas adapté pour assembler les panneaux au sol ou au plafond. Par ailleurs, lorsque les panneaux sont destinés à former un coffrage, un tel assemblage ne présente pas toujours la résistance suffisante permettant de s'opposer à la force exercée par le contenant du coffrage (par exemple, du béton ou un dérivé du béton) sur la zone de jonction entre les deux panneaux.

### Résumé de l'invention

Aussi, l'invention vise à proposer un système d'assemblage simple à mettre en oeuvre permettant de pallier aux inconvénients précités.

A cet effet, l'invention concerne un élément de construction, dit premier élément de construction, équipé d'un système d'assemblage à un deuxième élément de construction, ledit système d'assemblage assemblant une face du premier élément de construction, dite première face d'assemblage, à une face du deuxième élément de construction, dite deuxième face d'assemblage, ledit système d'assemblage comprenant :
- un logement ménagé dans ladite première face d'assemblage dudit premier élément de construction, ledit logement comportant un rétrécissement au niveau de son interface avec ladite première face d'assemblage; et
- un élément d'assemblage comprenant un corps destiné à être monté par une première extrémité sur la deuxième face d'assemblage, lequel corps est muni, à une deuxième extrémité, d'une tête ayant une forme dite déployée en l'absence de contrainte et une forme dite escamotée en présence d'une force exercée sur sa périphérie,
ledit logement et ledit élément d'assemblage étant agencés et dimensionnés pour que, pour assembler le premier élément de construction au second élément de construction, la tête l'élément d'assemblage est introduite en force dans le logement, la tête de l'élément d'assemblage présentant une forme escamotée à son passage dans le rétrécissement et une forme déployée après le passage du rétrécissement, ledit rétrécissement formant alors moyens de retenue de la tête dans le logement.

Selon une réalisation particulière, la tête de l'élément d'assemblage est en matériau élastiquement déformable.

Selon une réalisation particulière, la tête de l'élément d'assemblage est escamotable en présence d'une force exercée sur sa périphérie.

Selon une réalisation particulière, l'élément d'assemblage présente une forme générale de champignon ou de parapluie.

Selon une réalisation particulière, le logement présente une forme de sphère tronquée selon un plan défini par ladite première face d'assemblage.

Selon une réalisation particulière, le corps de l'élément d'assemblage est une plaque et la tête est une portion de cylindre creux orientée vers la plaque.

Selon une réalisation particulière, le logement présente une forme de cylindre tronqué selon un plan défini par ladite première face d'assemblage.

Selon une réalisation particulière, le premier élément de construction et/ou le deuxième élément de construction est un panneau en matériau polymère, tel que du polyuréthane, du polystyrène ou un de leurs dérivés, ou en matériau bio-sourcé, tel que de la terre crue, de la cellulose ou de la fibre végétale.

Selon une réalisation particulière, le premier élément de construction comporte un canal s'étendant entre une face dudit premier élément de construction, différente de la première face d'assemblage, et ledit logement pour alimenter en mousse expansive ledit logement.

L'invention concerne également un procédé d'assemblage d'un élément de construction, dit premier élément de construction, à un deuxième élément de construction via un système d'assemblage, ledit système d'assemblage assemblant une face du premier élément de construction, dite première face d'assemblage, à une face du deuxième élément de construction, dite deuxième face d'assemblage, ledit système d'assemblage comprenant un logement ménagé dans ladite première face d'assemblage dudit premier élément de construction et un rétrécissement (33) au niveau de son interface avec ladite première face d'assemblage (11), et un élément d'assemblage comprenant un corps muni, à une première extrémité, d'une tête ayant une forme dite déployée en l'absence de contrainte et une forme dite escamotée en présence d'une force exercée sur sa périphérie,
ledit procédé comportant les étapes suivantes:
- monter, par une deuxième extrémité, le corps de l'élément d'assemblage sur la deuxième face d'assemblage,
- introduire en force la tête de l'élément d'assemblage est introduite en force dans le logement jusqu'à dépasser le rétrécissement, ladite tête présentant une forme escamotée à son passage dans le rétrécissement et une forme déployée après le passage du rétrécissement.

Selon une réalisation particulière, la tête de l'élément d'assemblage est en matériau élastiquement déformable.

Selon une réalisation particulière, le premier élément de construction et/ou le deuxième élément de construction est un panneau en matériau polymère, tel que du polyuréthane, du polystyrène ou un de leurs dérivés, ou en matériau bio-sourcé, tel que de la terre crue, de la cellulose ou de la fibre végétale.

Selon une réalisation particulière, le procédé comporte en outre une étape de remplissage, au moins partiel, dudit logement avec de la mousse expansive après introduction en force de la tête de l'élément d'assemblage dans le logement.

Selon une réalisation particulière, la mousse expansive est de la mousse polyuréthane.

Enfin, l'invention concerne également un dispositif de coffrage pour la construction de murs comprenant au moins un premier élément de construction équipé d'un système d'assemblage à un deuxième élément de construction tels que définis précédemment.

### Brève description des figures

D'autres avantages pourront encore apparaître à l'homme du métier à la lecture des exemples ci-dessous, illustrés par les figures annexées, donnés à titre illustratif.
- Les **figures 1 à 4** sont des vues en coupe transversale illustrant un premier élément de construction équipé d'un système d'assemblage à un deuxième élément de construction selon un premier mode de réalisation de l'invention avant, pendant et après l'assemblage;
- La **figure 5** est une vue schématique en perspective du premier élément de construction et du système d'assemblage des figures 1 à 4;
- La **figure 6****,** à comparer avec la figure 2, est une vue schématique en coupe illustrant un deuxième mode de réalisation ;
- La **figure 7****,** à comparer avec la figure 5, est une vue schématique en perspective illustrant un troisième mode de réalisation ;
- La **figure 8****,** à comparer avec la figure 5 ou 7, est une vue schématique en perspective illustrant un quatrième mode de réalisation ;
- La **figure 9** est une vue schématique en coupe illustrant une amélioration des quatre modes de réalisation précités ;
- La **figure 10** est une vue schématique en coupe illustrant un premier élément de construction équipé d'un système d'assemblage au sol selon l'invention;
- La **figure 11** est une vue schématique en coupe illustrant un premier élément de construction équipé d'un système d'assemblage au plafond selon l'invention; et
- La **figure 12** est une vue schématique en coupe illustrant un dispositif de coffrage conforme à l'invention.

### Description détaillée de l'invention

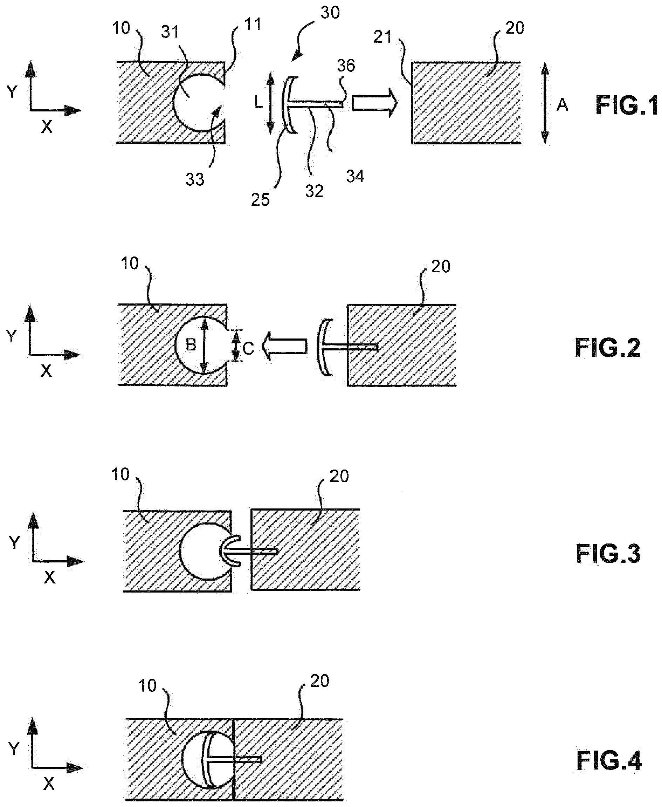

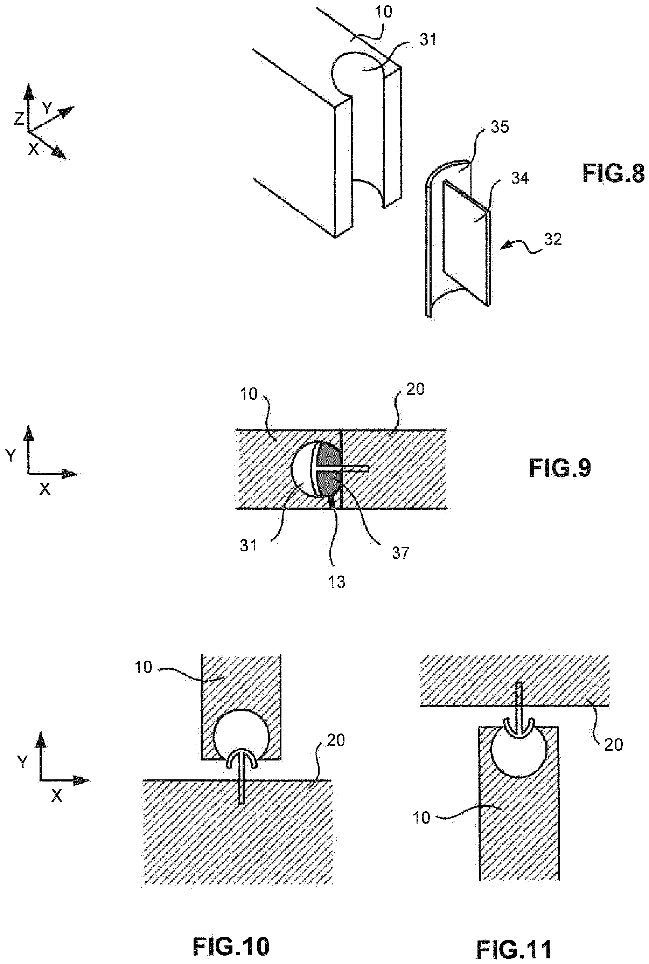

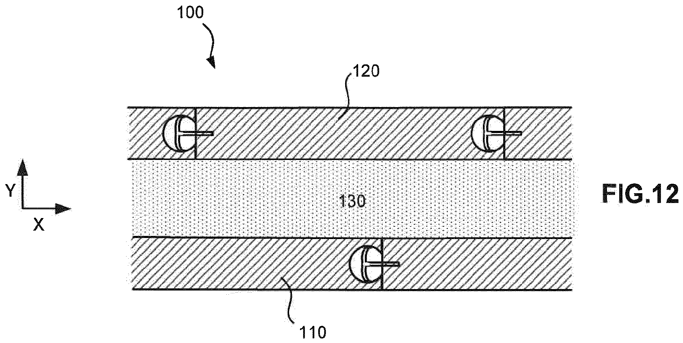

L'invention sera d'abord décrite dans le cadre de l'assemblage de deux panneaux de construction en polystyrène ou polyuréthane (Figures 1 à 9). Elle sera ensuite brièvement décrite dans le cadre de l'assemblage d'un panneau de construction avec le sol ou le plafond (Figures 10 et 11). Elle sera enfin décrite dans une application de coffrage (Figure 12).

Selon un mode de réalisation de l'invention illustré par les figures 1 à 5, l'invention vise à assembler un panneau 10 à un panneau 20 au moyen d'un système d'assemblage 30. Le système d'assemblage 30 sert plus particulièrement à assembler une face 11 du panneau 10 à une face 21 du panneau 20.

Les figures sont orientées suivant un axe X longitudinal parallèle à la longueur des panneaux et pointant vers la droite, un axe transversal Y parallèle à l'épaisseur des panneaux pointant vers l'arrière et un axe Z vertical parallèle à la hauteur des panneaux et pointant vers le haut.

Les panneaux 10 et 20 présentent une épaisseur A (dimension des panneaux suivant l'axe Y) et les faces 11 et 21 dans des plans YZ parallèles

Selon l'invention, le système d'assemblage 30 comprend un logement 31 ménagé dans la face 11 du panneau 10 et un élément d'assemblage 32 destiné à être monté sur la face 21 du panneau 20.

L'élément d'assemblage 32 comprend un corps 34 muni à l'une de ses extrémités d'une tête 35 élastiquement déformable. Dans l'exemple illustré ici, l'élément d'assemblage 30 présente une forme de parapluie ou de champignon. La tête 35 est par exemple réalisée en un matériau élastique, par exemple en plastique souple.

En l'absence de contrainte, la tête présente une forme dite déployée (parapluie complètement ouvert) et une forme dite escamotée en présence d'une force exercée sur sa périphérie (parapluie à demi ouvert ou fermé).

En variante, l'élément d'assemblage est réalisé en un matériau rigide et présente une tête escamotable en présence d'une force exercée sur sa périphérie. La tête est par exemple montée avec des ressorts la maintenant en position ouverte (forme déployée) en l'absence de contrainte sur sa périphérie. Ce type d'élément d'assemblage fonctionne sur le principe d'une cheville de plafonnier.

L'élément d'assemblage 32 est monté par l'extrémité libre 36 du corps 34 sur la face 21 du panneau 20 comme montré sur **la** **figure 1****.** L'extrémité 36 est par exemple munie d'un filetage pour être vissée dans la face 21. En variante, l'extrémité 36 est noyé dans le panneau 20 lors de sa fabrication.

Le logement 31 est destiné à recevoir l'élément d'assemblage 32 lors de l'assemblage des panneaux 10 et 20. De manière générale, le logement 31 comprend une portion dite de réception pour recevoir, après assemblage des deux panneaux, la tête 35 et une portion amont située entre la portion de réception et la face 11. La portion amont comprend un rétrécissement 33 (au niveau de l'interface entre le logement 31 et la face 11) pour déformer la tête 35 lorsque l'élément d'assemblage 32 est introduit en force dans le logement 31 comme montré aux **figures 2 à 4****.**

Le logement 31 et l'élément d'assemblage 32 sont dimensionnés pour que, lorsque l'élément d'assemblage 32 est introduit en force dans la portion amont du logement jusqu'à déboucher dans ladite portion de réception, la tête 35 de l'élément d'assemblage présente une forme escamotée lors de son passage dans la portion amont (le rétrécissement) du logement et une forme déployée dans la portion de réception du logement.

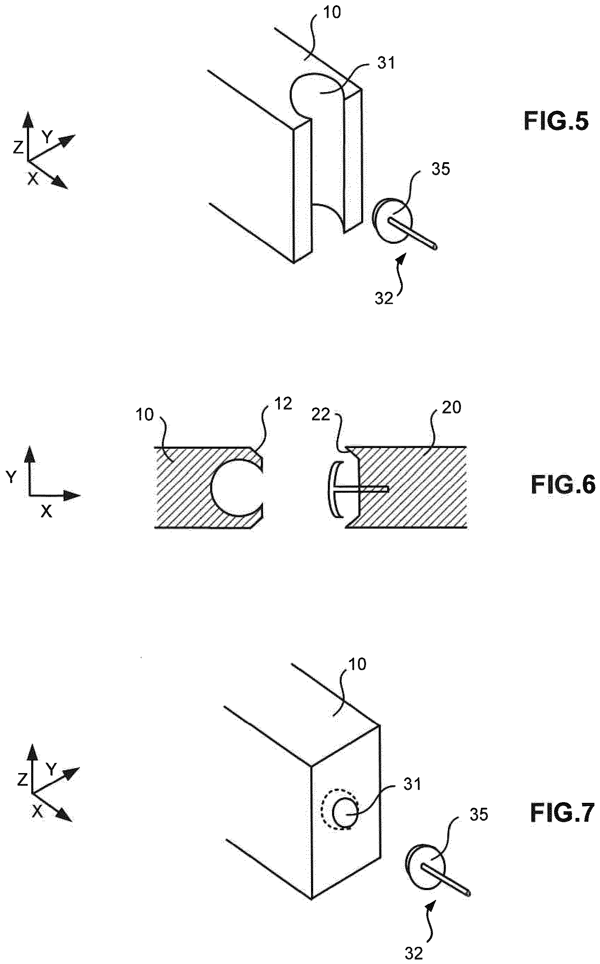

Dans l'exemple de **la** **figure 5****,** le logement 31 se présente une forme de cylindre s'étendant longitudinalement selon l'axe Z, ledit cylindre étant tronqué selon le plan défini par la face 11. Le cylindre est tronqué de sorte à obtenir un rétrécissement du logement 31 au niveau de son interface avec la face 11. La plus grande dimension du cylindre du logement 31 dans le plan YZ est égale à B (= diamètre du cylindre) et sa dimension dans le plan YZ au niveau du rétrécissement est égale à C, avec B>C.

La tête 35 est dimensionnée pour que sa largeur, notée L, soit, en l'absence de contrainte (forme déployée), supérieure à la dimension C. Elle peut être égale ou sensiblement égale à B. Lorsque la tête est sous contrainte (forme escamotée), la largeur L est inférieure à C pour permettre l'introduction de la tête 35 dans le logement 31.

Après assemblage des panneaux, le rétrécissement maintient les deux panneaux assemblés et les panneaux 10 et 20 sont solidaires entre eux. Le rétrécissement constitue un moyen de retenue de la tête 25 dans le logement 31.

Pour obtenir un bon alignement des panneaux dans le plan XZ, le logement 31 et l'élément d'assemblage 32 sont avantageusement centrés respectivement sur les faces 11 et 21.

Cet alignement peut également être assuré en réalisant un chanfrein 12 au niveau des arêtes verticales (s'étendant selon l'axe Z) du panneau 10 et en prévoyant un chanfrein inversé 22 au niveau des arêtes verticales du panneau 20 comme illustré à la **figure 6****.**

Par ailleurs, pour que les faces 11 et 21 soient bien en contact après assemblage des deux panneaux, la longueur de la partie de la tige 34 non vissée dans le panneau 20 est calculée pour que la tête 35 soit au-delà de la portion amont après assemblage.

Selon une première variante illustrée par la **figure 7****,** au lieu d'être un cylindre, le logement 31 est une sphère de diamètre B, ladite sphère étant tronquée selon le plan défini par la face 11. La tête 35 est une portion de sphère ayant un diamètre sensiblement égal à B. Cette variante d'assemblage permet un positionnement à la fois dans le plan XZ et dans le plan XY.

Selon une autre variante illustrée par la **figure 8****,** le logement 31 est un cylindre tronqué comme illustré à la figure 5 et l'élément d'assemblage 32 comprend une plaque (s'étendant dans le plan XZ) formant le corps 34 et une plaque incurvée en forme de bouclier formant la tête 35. L'assemblage est identique au premier mode de réalisation.

Avantageusement, après mise en place de la tête de l'élément d'assemblage dans le logement, le logement 31 est rempli au moins partiellement de mousse expansive pour bloquer en translation la tête d'assemblage 32 dans le logement 31. A cet effet, le panneau 10 est muni d'un conduit 13 s'étendant entre l'une des faces selon le plan XZ et le logement 31 comme illustré à la **figure 9****.** La mousse expansive 37 fraîche est introduite dans le logement à travers ce conduit.

Le volume de mousse expansive introduit dans le logement 31 est avantageusement pré-calculé pour correspondre au volume du logement à remplir.

La mousse expansive va contribuer à solidariser entre eux l'ensemble des moyens du système d'assemblage, à savoir le logement 31 et l'élément d'assemblage 32.

Dans l'exemple de la figure 9, le canal 13 est disposé et la mousse expansive introduite de manière à pousser le parapluie vers le fonds de la portion de réception du logement 31.

Comme indiqué précédemment, l'invention peut également être employée pour assembler le panneau de construction 10 au sol ou au plafond.

La **figure** 10 illustre l'assemblage du panneau 10 au sol. Le sol constitue alors le deuxième élément de construction, noté 20 comme le deuxième panneau de construction dans les modes de réalisation illustrés par les figures 1 à 9. Dans ce mode de réalisation, le logement 31 est ménagé dans le chant inférieur du panneau 10. L'élément d'assemblage 32 est ancré au sol, par exemple par vissage. Les opérations d'assemblage sont identiques à celles décrites précédemment en référence aux figures 2 à 4.

La **figure** 11 illustre l'assemblage du panneau 10 au plafond. Le sol constitue ici le deuxième élément de construction noté 20. Dans ce mode de réalisation, le logement 31 est ménagé dans le chant supérieur du panneau 10. L'élément d'assemblage 32 est ancré au plafond. Les opérations d'assemblage sont identiques à celles décrites précédemment en référence aux figures 2 à 4.

Bien entendu, on peut également envisager d'assembler de la même manière le panneau 10 à un autre élément de construction, tel que par exemple un mannequin en bois pour la réservation d'ouvertures.

L'assemblage de panneaux de construction entre eux ou au sol ou au plafond a différentes application notamment l'isolation et l'habillage de murs mais également la réalisation de coffrages.

La **figure 12** illustre un dispositif de coffrage 100 comprenant deux parois parallèles 110 et 120 comprenant chacune des panneaux de construction assemblés entre eux comme illustrés aux figures 1 à 4. Une fois les parois montées, du béton 130 est coulé entre les deux parois.

L'invention est décrite dans ce qui précède à titre d'exemple. Il est entendu que la personne de l'art est à même de réaliser différentes variantes de réalisation de l'invention, en associant par exemple les différentes caractéristiques ci-dessus prises seules ou en combinaison, sans pour autant sortir du cadre de l'invention revendiquée. L'invention a notamment été décrite dans le cadre de panneaux de construction en polystyrène ou polyuréthane. Bien entendu, elle est applicable à d'autres matériaux polymères et à des matériaux bio-sourcés, tels que de la terre crue, de la cellulose ou de la fibre végétale.

## Revendications

1. Elément de construction, dit premier élément de construction (10), équipé d'un système d'assemblage (30) à un deuxième élément de construction (20), ledit système d'assemblage (30) assemblant une face du premier élément de construction (10), dite première face d'assemblage (11), à une face du deuxième élément de construction, dite deuxième face d'assemblage (21), ledit système d'assemblage (30) comprenant :
- un logement (31) ménagé dans ladite première face d'assemblage dudit premier élément de construction (10), ledit logement comportant un rétrécissement (33) au niveau de son interface avec ladite première face d'assemblage (11) ; et
- un élément d'assemblage (32) comprenant un corps (34) destiné à être monté par une première extrémité (36) sur la deuxième face d'assemblage (21), lequel corps (34) est muni, à une deuxième extrémité, d'une tête (35) ayant une forme dite déployée en l'absence de contrainte et une forme dite escamotée en présence d'une force exercée sur sa périphérie,
ledit logement (31) et ledit élément d'assemblage (32) étant agencés et dimensionnés pour que, pour assembler le premier élément de construction (10) au second élément de construction (20), la tête de l'élément d'assemblage est introduite en force dans le logement (31), la tête (35) de l'élément d'assemblage présentant une forme escamotée à son passage dans le rétrécissement et une forme déployée après le passage du rétrécissement, ledit rétrécissement formant alors moyens de retenue de la tête dans le logement.

2. Elément de construction selon la revendication 1, **caractérisé en ce que** la tête (35) de l'élément d'assemblage (32) est en matériau élastiquement déformable.

3. Elément de construction selon la revendication 1, **caractérisé en ce que** la tête (35) de l'élément d'assemblage (32) est escamotable en présence d'une force exercée sur sa périphérie.

4. Elément de construction selon l'une quelconque des revendications 1 à 3, **caractérisé en ce que** l'élément d'assemblage (32) présente une forme générale de champignon ou de parapluie.

5. Elément de construction selon la revendication 4, **caractérisé en ce que** le logement (31) présente une forme de sphère tronquée selon un plan défini par ladite première face d'assemblage (11).

6. Elément de construction selon la revendication 4, **caractérisé en ce que** le corps (34) de l'élément d'assemblage est une plaque et la tête (35) est une portion de cylindre creux orientée vers la plaque.

7. Elément de construction selon la revendication 6, **caractérisé en ce que** le logement (31) présente une forme de cylindre tronqué selon un plan défini par ladite première face d'assemblage (21).

8. Elément de construction selon l'une quelconque des revendications 1 à 7, **caractérisé en ce que** le premier élément de construction (10) et/ou le deuxième élément de construction (20) est un panneau en matériau polymère, tel que du polyuréthane, du polystyrène ou un de leurs dérivés, ou en matériau bio-sourcé, tel que de la terre crue, de la cellulose ou de la fibre végétale.

9. Elément de construction selon l'une quelconque des revendications 1 à 8, **caractérisé en ce qu'**il comporte un canal (13) s'étendant entre une face dudit premier élément de construction, différente de la première face d'assemblage, et le ledit logement (31) pour alimenter en mousse expansive ledit logement.

10. Procédé d'assemblage d'un élément de construction, dit premier élément de construction (10), à un deuxième élément de construction (20) via un système d'assemblage (30), ledit système d'assemblage assemblant une face du premier élément de construction, dite première face d'assemblage (11), à une face du deuxième élément de construction, dite deuxième face d'assemblage (21), parallèle à ladite première face d'assemblage, ledit système d'assemblage comprenant un logement (31) ménagé dans ladite première face d'assemblage dudit premier élément de construction (10) et un rétrécissement (33) au niveau de son interface avec ladite première face d'assemblage (11), et un élément d'assemblage (32) comprenant un corps (34) muni, à une première extrémité, d'une tête (35) ayant une forme dite déployée en l'absence de contrainte et une forme dite escamotée en présence d'une force exercée sur sa périphérie,
ledit procédé comportant les étapes suivantes:
- monter, par une deuxième extrémité (36), le corps (34) de l'élément d'assemblage (32) sur la deuxième face d'assemblage (21),
- introduire en force la tête (35) de l'élément d'assemblage dans le logement jusqu'à dépasser le rétrécissement, ladite tête (35) présentant une forme escamotée à son passage dans le rétrécissement et une forme déployée après le passage du rétrécissement.

11. Procédé selon la revendication 10, **caractérisé en ce que** la tête (35) de l'élément d'assemblage (32) est en matériau élastiquement déformable.

12. Procédé selon la revendication 10 ou 11, **caractérisé en ce que** le premier élément de construction (10) et/ou le deuxième élément de construction (20) est un panneau en matériau polymère, tel que du polyuréthane, du polystyrène ou un de leurs dérivés, ou en matériau bio-sourcé, tel que de la terre crue, de la cellulose ou de la fibre végétale.

13. Procédé selon l'une quelconque des revendications 10 à 12, **caractérisé en ce qu'**il comporte en outre une étape de remplissage, au moins partiel, dudit logement avec de la mousse expansive après introduction en force de la tête (35) de l'élément d'assemblage dans le logement.

14. Procédé selon la revendication 13, **caractérisé en ce que** la mousse expansive est de la mousse polyuréthane.

15. Dispositif de coffrage pour la construction de murs comprenant au moins un premier élément de construction équipé d'un système d'assemblage (30) à un deuxième élément de construction (20) selon l'une des revendications 1 à 9.
